# FASCICULE DE BREVET EUROPEEN

(11) **EP 1 693 617 B1**
(45) Date de publication et mention de la délivrance du brevet: **10.09.2008**
(21) Numéro de dépôt: 06290256.4
(22) Date de dépôt: 14.02.2006
(51) Int. Cl.: F21V 19/00

(54) **Dispositif d'éclairage et/ou de signalisation pour véhicule automobile**
Kfz-Beleuchtungs- und/oder Signaleinrichtung
Vehicle lighting or signalling device

(30) Priorité: 18.02.2005 FR 0501717
(43) Date de publication de la demande: 23.08.2006
(73) Titulaire: VALEO VISION, 93012 Bobigny Cedex (FR)
(72) Inventeur: Di Dio, Renato, 10051 Avigliana (TO) (IT)
(74) Mandataire: Renous Chan, Véronique

(56) Documents cités:
- DE-A1- 19 933 768
- FR-A- 2 269 028
- FR-A- 2 721 563
- US-A- 4 797 790

## Description

### Domaine de l'invention

La présente invention a pour objet un dispositif d'éclairage et/ou de signalisation pour véhicule automobile comportant au moins un feu de signalisation, de type feu de position. Ce feu de position comporte deux éléments, un élément rigide fixé dans le dispositif d'éclairage et un élément mobile, comportant une ampoule, apte à coulisser dans l'élément rigide.

L'invention concerne également un véhicule automobile comportant un tel dispositif d'éclairage.

L'invention trouve des applications dans le domaine des véhicules circulant sur route et, notamment, des véhicules automobiles. Elle trouve, en particulier, des applications dans le domaine de l'éclairage et de la signalisation des véhicules.

### Etat de la technique

Généralement, un dispositif d'éclairage de véhicule comporte un boîtier fermé par une glace de protection. Cette glace de protection forme une face de sortie du dispositif d'éclairage. Ce dispositif d'éclairage comporte généralement, à l'intérieur du boîtier, un feu de route, un feu de croisement et un feu de position. Le feu de position a une intensité et une portée lumineuse faible. Le rôle des feux de position est de signaler la présence et la position du véhicule aux autres conducteurs.

Actuellement, il est connu d'utiliser, dans un dispositif d'éclairage, un feu de position comportant un porte lampe rigide. Ce porte lampe est fixé, sur le boîtier du dispositif d'éclairage, par un système de fixation classique tel qu'un système à baïonnette. Une ampoule est montée sur le porte lampe. Cette ampoule est généralement de faible puissance, par exemple de 3 à 5 Watts. Le porte lampe est placé, dans le boîtier du dispositif d'éclairage, de telle sorte que l'ampoule soit face à la glace de protection.

Un tel feu de position présente des inconvénients. En effet, lorsqu'un utilisateur est désireux de changer l'ampoule d'un feu de position de son véhicule, par exemple parce qu'elle est défaillante, il est obligé, dans le lieu difficile d'accès qu'est le boîtier du dispositif d'éclairage, de démonter le porte lampe du boîtier pour changer l'ampoule, puis de le remonter sur le boîtier du dispositif d'éclairage.

Le démontage et le montage d'un porte lampe fixé directement sur le boîtier du dispositif d'éclairage nécessite, de la part de l'utilisateur, une série de mouvements de rotation et de translation. Or, comme l'environnement du porte lampe dans un dispositif d'éclairage est relativement exigu, ces mouvements sont difficiles et pénibles à réaliser pour l'utilisateur. Et ce problème de manque d'accessibilité se pose d'autant plus actuellement qu'il y a une nouvelle tendance, pour des raisons de style, à placer les lampes de position en avant du projecteur, près de la glace de fermeture, alors que ces lampes sont montées par l'arrière du projecteur : jusque-là, il était usuel de placer les lampes de position plutôt à l'arrière du projecteur, elles étaient donc de fait plus accessibles.

Du fait de cette faible accessibilité du porte lampe, le conducteur a souvent tendance à requérir les services d'un professionnel pour remplacer l'ampoule, avec les inconvénients que cela entraînent en coûts de service, immobilisation du véhicule, etc....

Il est également connu de la demande de brevet FR A 2 721 563 un dispositif pour la mise en place d'une ampoule de phare ou de feu de signalisation de véhicule automobile, avec un porte lampe qui comporte une douille d'accrochage de l'ampoule, un embout de préhension et de fixation sur une cloison du véhicule, et un corps allongé reliant la douille et l'embout.

### Exposé de l'invention

L'invention a justement pour but de remédier aux inconvénients des techniques exposées précédemment. Pour cela, l'invention propose un dispositif d'éclairage et/ou de signalisation dans lequel un feu de signalisation, par exemple un feu de position ou un feu d'indicateur de direction, comporte un porte lampe comprenant deux éléments et insérables l'un dans l'autre. Un premier élément est un élément rigide fixé sur le boîtier du dispositif d'éclairage. Un deuxième élément est un élément mobile, portant l'ampoule, apte à être introduit/inséré dans le premier élément du porte lampe. Lors d'un remplacement de l'ampoule, l'élément mobile du porte lampe est retiré de l'élément fixe et retiré du boîtier du dispositif d'éclairage. L'ampoule est remplacée et l'élément mobile est réintroduit dans l'élément fixe. Aucun mouvement de rotation n'est nécessaire, par l'utilisateur, pour monter ou démonter le porte lampe. L'utilisateur a uniquement des mouvements de translation à effectuer.

Plus précisément, l'invention concerne un dispositif d'éclairage et/ou de signalisation pour véhicule automobile comportant un boîtier fermé par une glace de protection, à l'intérieur duquel est monté un feu de signalisation comprenant un porte lampe sur lequel est fixée une ampoule,
le porte lampe comportant
- un manchon rigide fixé sur le boîtier (la fixation pouvant être amovible ou non) et
- un support flexible, à une première extrémité duquel est fixée l'ampoule (de façon amovible), ledit support flexible étant apte à être introduit dans le manchon rigide.

Comme exposé plus haut, le manchon, et le support flexible une fois introduit dans le manchon, se trouvent pour l'essentiel à l'intérieur du boîtier du dispositif d'éclairage ou de signalisation. Sa disposition permet ainsi d' « amener » à l'intérieur du dispositif, par l'arrière du dispositif, une lampe qui peut être située très en avant, à proximité de la glace de fermeture par exemple.

L'invention peut comporter également une ou plusieurs des caractéristiques suivantes :
- le manchon rigide comporte une sortie apte à recevoir une tête du support flexible et une entrée apte à recevoir une queue du support flexible.
- la tête et la queue du support flexible sont rigides et reliées par l'intermédiaire d'un corps flexible.
- le manchon rigide comporte des premiers contacts électriques placés sur la sortie du manchon rigide et reliés à une source d'alimentation électrique.
- la tête du support flexible comporte des seconds contacts électriques assurant une liaison électrique entre l'ampoule et les premiers contacts électriques du manchon rigide.
   L'association manchon/ support flexible permet d'amener la lampe dans des zones éloignées de l'arrière du boîtier, et d'amener avec elle son faisceau d'alimentation électrique.
- le porte lampe comporte un système de détrompage, notamment pour l'orientation du support flexible par rapport au manchon rigide
- le support flexible et le manchon rigide ont chacun une forme au moins partiellement ovale, formant système de détrompage.
- le support flexible comporte des nervures et le manchon rigide comporte dans des fentes aptes à recevoir les nervures du support flexible (ou réciproquement), les nervures et les fentes formant système de détrompage.
- le porte lampe comporte au moins un système de verrouillage, notamment un système de clipsage entre au moins un ergot sur le support flexible et au moins une ouverture sur le manchon rigide.
- la queue du support flexible comporte un embout de préhension.
- le manchon rigide comporte un support apte à supporter le manchon rigide.
- le manchon rigide comporte, sur l'entrée, une languette de fixation permettant de fixer le manchon rigide sur le boîtier.
- les premiers contacts électriques du manchon rigide sont reliés à la source d'alimentation électrique au moyen de fils électriques.
- le manchon rigide comporte au moins un moyen d'attache destiné à attacher les fils électriques sur ledit manchon rigide.
- le manchon rigide comporte un support apte à supporter le manchon rigide .
- ce support comporte une tige rigide munie d'un pied, ledit pied étant notamment de forme plate et/ou comportant un élément élastique de type lame ressort. On choisit ainsi pour ce pied une forme appropriée pour qu'il puisse prendre appui sur la paroi interne du boîtier du dispositif. L'élément élastique est avantageux en ce qu'il permet d'absorber jeux et vibrations.

L'invention concerne également un véhicule automobile, comportant au moins un dispositif d'éclairage selon l'invention.

### Brève description des dessins

La figure 1 représente schématiquement un exemple d'un dispositif d'éclairage selon l'invention placé à l'avant d'un véhicule et équipé d'un feu de position.

La figure 2 représente une vue en perspective d'un manchon rigide du dispositif de l'invention.

La figure 3 représente une vue en perspective d'un support flexible du dispositif de l'invention.

La figure 4 représente une vue de derrière, en coupe, du support flexible monté dans le manchon rigide du porte lampe du dispositif de l'invention.

### Description détaillée de modes de réalisation de l'invention

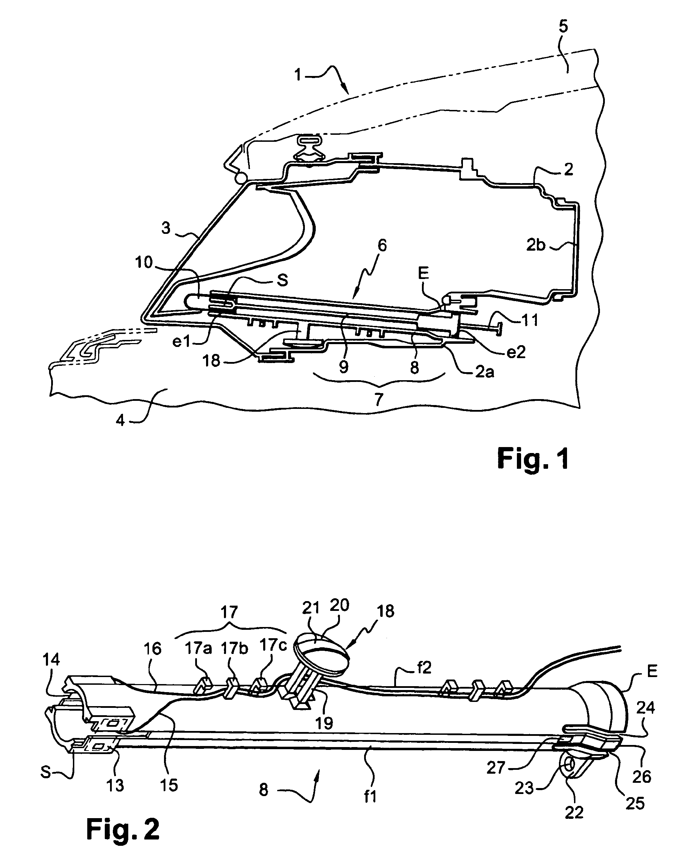

La figure 1 représente schématiquement un exemple d'un dispositif d'éclairage, selon l'invention, situé à l'avant d'un véhicule automobile : un projecteur. Le dispositif d'éclairage 1 est placé, dans cet exemple, entre le pare-chocs 4 et le capot 5 du véhicule automobile. Ce dispositif d'éclairage 1 comporte un boîtier rigide 2 fermé par une glace de protection 3. Cette glace de protection 3 forme une face de sortie du dispositif d'éclairage 1.

Le dispositif d'éclairage 1 comporte un feu de position 6. Ce feu de position 6 comporte un porte lampe 7 placé à l'intérieur du boîtier 2. Dans l'exemple de la figure 1, le porte lampe 7 est placé le long d'une paroi inférieure 2a du boîtier 2, entre une paroi arrière 2b du boîtier 2 et la glace de protection 3. Ce porte lampe 7 peut se situer à d'autres emplacements, dans le boîtier, du dispositif d'éclairage, en fonction du modèle du véhicule. On remarque que dans la configuration représentée, l'ampoule du feu de position 10 associée au porte lampe 7 est placée complètement à l'avant du projecteur, près de la glace, ce qui est une tendance actuelle, qui explique la difficulté d'accès à la lampe, montée par l'arrière et la nécessité de trouver une solution simple pour changer l'ampoule 10. L'invention s'applique de la même façon pour des lampes situées plus en arrière dans le projecteur ;

Le porte lampe 7 comporte deux éléments emboîtables : un manchon rigide 8 et un support flexible 9. Le manchon rigide 8 est une pièce évidée, fixée sur le boîtier 2 du dispositif d'éclairage 1. Le manchon rigide a une forme allongée. Le manchon rigide 8 comporte deux extrémités : une entrée E et une sortie S. La sortie S est à proximité de la glace de protection 3. L'entrée E est à proximité de la paroi arrière 2b du boîtier 2, opposée à la glace de protection 3.

Le support flexible 9 a une structure adaptée pour coulisser dans le manchon rigide 8. Le support flexible 9 comporte deux extrémités e1 et e2. L'extrémité e1 comporte une base supportant une ampoule 10, de préférence de faible puissance. Pour installer l'ampoule 10 dans le porte lampe 7, l'utilisateur introduit l'extrémité e1 du support flexible 9 dans le manchon rigide 8, par l'entrée E dudit manchon, puis il pousse le support flexible 9 vers la sortie S du manchon rigide 8. L'extrémité e1 progresse donc dans le manchon rigide 8 jusqu'à ce qu'elle s'emboîte dans la sortie S et que l'extrémité e2 s'emboîte dans l'entrée E. Autrement dit, l'extrémité e1 et l'extrémité e2 du support flexible 9 sont aptes à s'emboîter respectivement dans la sortie S et dans l'entrée E du manchon rigide 8. Lorsque les extrémités e1 et e2 sont emboîtées, l'ampoule 10 est installée.

Le manchon rigide 8 comporte un support 18 permettant de maintenir le manchon rigide 8 dans le boîtier 2, lors des vibrations du véhicule automobile. Le support 18 forme un support pour le manchon rigide 8.

L'extrémité e2 du support flexible 9 comporte un embout de préhension 11 servant de poignée à un utilisateur, lors du montage ou du démontage du support flexible 9 dans le manchon rigide 8.

La figure 2 représente, selon une vue en perspective, un exemple du manchon rigide 8 du dispositif de l'invention. Le manchon rigide 8 a un corps de forme allongée. Dans un exemple préféré, la longueur du manchon 8 est de l'ordre de 15 à 20 cm. La longueur du manchon est à moduler en fonction du positionnement de l'ampoule 10 dans le projecteur. Le corps du manchon rigide 8 comporte une cavité creuse et débouchante, dans laquelle peut s'insérer un autre élément, à savoir le support flexible. Autrement dit, le manchon rigide 8 a une forme oblongue, par exemple cylindrique, qui sert de guide au support flexible.

Le manchon rigide 8 est réalisé dans un matériau rigide, par exemple du plastique ou du métal.

Le manchon rigide 8 comporte deux faces f1 et f2, opposées l'une à l'autre. Chaque face f1 et f2 du manchon rigide 8 comporte au moins un contact électrique, respectivement, 13 et 14. Ces contacts électriques 13 et 14 se situent, de préférence, à proximité de la sortie S du manchon rigide 8. Ces deux contacts électriques 13 et 14 assurent une liaison électrique entre une source d'alimentation électrique (non représentée) et le support flexible du porte lampe.

Les contacts électriques 13 et 14 peuvent être reliés à une source d'alimentation électrique à l'aide de fils électriques, respectivement, 15 et 16. Ces fils électriques 15 et 16 sont constitués d'un ou de plusieurs brins d'un matériau métallique conducteur. Ces fils électriques 15 et 16 sont destinés à établir une liaison électrique entre, respectivement, les contacts électriques 13 et 14 et la source d'alimentation électrique.

Pour maintenir ces fils électriques 15 et 16, le manchon rigide 8 peut comporter un ou plusieurs moyens d'attache 17. Un moyen d'attache 17 peut consister en une série de crochets 17a, 17b, 17c. Chaque crochet 17a, 17b, 17c est dans cet exemple un élément en forme de L. D'autres formes sont possibles, notamment des formes en anneau avec ouverture. Plusieurs crochets, par exemple 3, sont placés tête bêche les uns par rapport aux autres. Les crochets 17a, 17b, 17c sont de préférence rigides. Ils peuvent être réalisés dans le même matériau que le corps du manchon. Les crochets 17a, 17b, 17c sont positionnés le long du manchon rigide 8. Ils peuvent être placés à différents emplacements sur le manchon rigide 8, par exemple de part et d'autre du support 18.

Dans l'exemple de la figure 2, le manchon rigide 8 comporte deux moyens d'attache de trois crochets chacun. Les six crochets 17 ont pour rôle de rassembler, de maintenir et de plaquer les fils électriques 15 et 16 le long du manchon rigide 8.

Le manchon rigide 8 comporte un support 18 rigide. Il se présente sous la forme d'un élément saillant radialement par rapport à la direction principale longitudinale du manchon. Ce support 18 est de préférence, équidistant des faces f1 et f2 du manchon rigide 8. Le support 18 peut être réalisé dans le même matériau que le corps du manchon rigide 8. Il est destiné à supporter le manchon rigide 8. Il est apte à subir des efforts, notamment des efforts dus aux vibrations du véhicule. Les crochets 17 et le support 18 peuvent également être conçus de façon à faire partie d'une même pièce que l'on vient rapporter sur le corps du manchon 8.

Dans un exemple préféré, le support 18 est implanté au centre du manchon rigide et il comporte une tige rigide 19, dont une extrémité est fixée sur le corps du manchon rigide 8. Un pied 20 est fixé sur une autre extrémité de la tige 19. Ce pied 20 peut être de forme plate de sorte qu'il peut reposer sur la paroi inférieure 2a du boîtier 2 du dispositif d'éclairage. Le pied 20 peut comporter une lame ressort 21 en appui sur la paroi 2a du boîtier. Cette lame ressort 21 a pour rôle d'amortir les vibrations provenant du déplacement du véhicule, pour maintenir le corps du manchon rigide en place, notamment face à la glace de protection du boîtier du dispositif d'éclairage.

Le manchon rigide 8 comporte, sur l'entrée E, une languette de fixation 22. La languette de fixation 22 est une pièce rigide, comportant un orifice 23. Cet orifice 23 est destiné à être traversé par un élément de fixation, du type vis ou rivet, permettant de fixer le manchon rigide 8 sur le boîtier. Le manchon rigide 8 est fixé de manière définitive sur le boîtier du dispositif d'éclairage au moyen de la languette de fixation 22. La languette de fixation 22 est, de préférence, située sur une face du manchon 8 opposée à celle du support 18.

Le manchon rigide 8 comporte, sur son entrée E, au moins une fente 24. Dans l'exemple de la figure 2, le manchon rigide 8 comporte quatre fentes, dont deux sont visibles sur la figure 2, à savoir les fentes 24 et 25 de la face f1. Plus précisément, chaque face f1 et f2 du manchon rigide 8 comporte deux fentes, telles que 24 et 25. Les fentes 24 et 25 sont des rainures étroites formées dans la zone d'entrée E du manchon rigide 8. Entre les deux fentes 24 et 25, le manchon rigide 8 comporte un orifice 27, dont le rôle sera décrit ultérieurement.

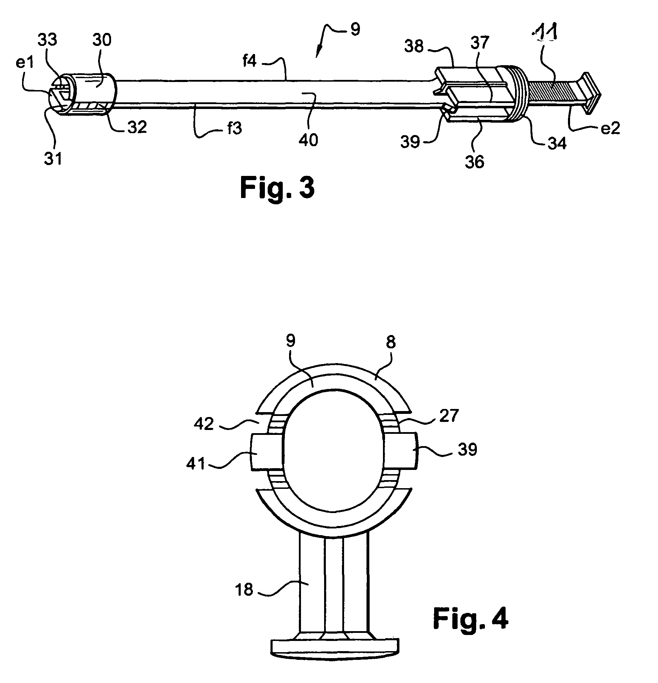

La figure 3 représente, selon une vue en perspective, un exemple d'un support flexible 9 du dispositif de l'invention. Le support flexible 9 comporte une tête rigide 30 située à une extrémité e1 du support flexible 9. Cette tête rigide 30 comporte un socle 31 destiné à supporter une ampoule (non représentée sur la figure 3). Autrement dit, le socle 31 forme une base sur laquelle est fixée une ampoule.

Le support flexible 9 comporte deux faces f3 et f4, opposées l'une à l'autre. Chaque face f3 et f4 du support flexible 9 comporte au moins un contact électrique, respectivement, 32 et 33. Ces contacts électriques 32 et 33 se situent, de préférence, sur la tête 30 du support flexible 9. Ces deux contacts électriques 32 et 33 sont en regard l'un de l'autre ; ils assurent une liaison électrique entre l'ampoule 10 et les contacts électriques 13 et 14 du manchon rigide 8.

Le support flexible 9 comporte une queue rigide 34, située à une extrémité e2 dudit support flexible. La queue 34 du support flexible 9 comporte un embout de préhension 11. Cet embout de préhension 11 permet une meilleure prise en main, pour l'utilisateur, lorsqu'il retire ou met en place le support flexible dans le manchon rigide.

La queue 34 du support flexible comporte au moins une nervure 36. De préférence, le support flexible 9 comporte autant de nervures 36 qu'il y a de fentes 24 et 25 sur le manchon rigide 8. Chaque nervure est destinée à être introduite dans une fente du manchon 8. Par exemple, il comporte deux nervures 36 et 37 sur chaque faces f3 et f4 du support flexible 9. Les nervures 36, 37 sont des parties saillantes, rectilignes, formées sur la queue rigide 34 du support flexible 9. Sur la figure 3, la vue en perspective du support flexible 9 montre trois nervures 36 et 37 sur la face f3 et 38 sur la face f4.

Le support flexible 9 peut comporter au moins un clip de fixation 39. Ce clip de fixation 39 est un ergot apte à s'emboîter dans l'orifice 27 du manchon rigide 8. Ce clip 39 peut être placé entre les deux nervures 36 et 37 du support flexible 9. Le clip de fixation 39 et l'orifice 27 forment un système de verrouillage du support flexible 9 dans le manchon rigide 8, qui sera décrit plus en détail ultérieurement.

La tête 30 et la queue 34 du support flexible 9 sont reliées par l'intermédiaire d'un corps flexible, ou corps souple, 40. Ce corps souple 40 a une forme allongée de dimensions adaptées à la cavité du manchon rigide 8. Le corps souple 40 peut avoir une forme sensiblement cylindrique de diamètre inférieure à la cavité du manchon rigide 8. Il peut aussi avoir une forme plate, dont la largeur est inférieure au diamètre de la cavité du manchon rigide 8.

Pour emboîter le support flexible 9 dans le manchon rigide 8, l'utilisateur fait coulisser le support flexible dans le manchon rigide en tenant le support flexible par son embout de préhension 11. Le support flexible 9 est introduit dans le manchon rigide 8 par l'entrée E dudit manchon rigide, et progresse dans le manchon rigide 8, jusqu'à ce que la tête 30 du support flexible 9 atteigne la sortie S du manchon rigide 8. Les contacts électriques 32 et 33 de la tête 30 du support flexible 9 sont alors en contact avec les contacts électriques 13 et 14 de la sortie S du manchon rigide 8. Autrement dit, les contacts électriques 32 et 33 de la tête 30 établissent une connexion électrique entre l'ampoule et les contacts électriques 13 et 14 du manchon rigide 8.

Lorsque la tête 30 du support flexible 9 a atteint la sortie S du manchon rigide 8, la queue 34 du support flexible est emboîtée dans l'entrée E du manchon rigide 8. Cet emboîtement est réalisé par l'encastrement respectif des nervures 36, 37 du support flexible 9 dans les fentes 24, 25 du manchon rigide 8.

Lors de l'emboîtement de la queue 34 du support flexible 9 dans l'entrée E du manchon rigide 8, le clip 39 du support flexible 9 s'insère dans l'orifice 27 du manchon rigide 8.

Pour éviter un mauvais positionnement du support flexible 9 dans le manchon rigide 8, lors de l'emboîtement du support flexible 9 dans le manchon rigide 8, le porte lampe 7 peut comporter un système de détrompage.

Dans un premier mode de réalisation, le système de détrompage du porte lampe est formé par la forme du support flexible et du manchon rigide, qui est au moins partiellement ovale. Dans une variante, le support flexible 9 et le manchon rigide 8 sont tous deux totalement de forme ovale. Dans une autre variante, la tête 30 et la queue 34 du support flexible 9 ainsi que le manchon rigide 8 ont une forme ovale, c'est-à-dire qu'ils ont une section ovale. La forme ovale de la tête 30 du support flexible 9 et du manchon rigide 8 définit la position d'introduction du support flexible 9 dans le manchon rigide 8. La forme ovale de la queue 34 du support flexible 9 et du manchon rigide 8 définit la position d'emboîtement du support flexible 9 dans le manchon rigide 8. Le support flexible 9 ne peut donc pas être introduit dans le manchon 8 avec une position incorrecte qui empêcherait tout contact électrique à la sortie S du manchon 8.

Dans une variante, le manchon rigide et le support flexible peuvent avoir une forme autre qu'ovale, par exemple polygonale, formant un système de détrompage.

Dans un second mode de réalisation, le système de détrompage du porte lampe est formé par les nervures du support flexible 9 et par les fentes du manchon rigide 8. Lorsque le positionnement du support flexible 9 dans le manchon rigide 8 est correct, les nervures du support flexible 9 s'emboîtent dans les fentes du manchon rigide 8. Dans les exemples des figures 2 et 3, les fentes et les nervures sont réparties de façon symétrique sur le contour, respectivement, du manchon rigide 8 et du support flexible 9. Elles peuvent aussi être réparties de façon asymétrique, améliorant encore l'effet de détrompage.

Les deux modes de réalisations du système de détrompage qui viennent d'être décrits peuvent être mis en oeuvre séparément ou ensemble sur un même porte lampe 7.

Le porte lampe selon l'invention peut comporter également un système de verrouillage. Ce système de verrouillage intervient lorsque le support flexible 9 est emboîté dans le manchon rigide 8. Ce système de verrouillage est formé par le clip 39 du support flexible 9 et par l'orifice 27 du manchon rigide 8. Lors de l'emboîtement des nervures 36 et 37 du support flexible 9 dans les fentes 24 et 25 du manchon rigide 8, le clip 39 s'insère dans l'orifice 27, permettant ainsi un verrouillage du support flexible 9 dans le manchon rigide 8.

Plusieurs ensembles de clip et orifice peuvent être réparties sur le contour du porte lampe 7 formant chacun un système de verrouillage.

Le système de verrouillage qui vient d'être décrit permet ainsi de maintenir le support flexible 9 dans le manchon rigide 8, quelles que soient les vibrations subies par le véhicule. De cette façon, le support flexible 9 peut être déboîté du manchon rigide 8 uniquement sous l'action d'un appui sur le clip 39 par l'utilisateur désireux de changer l'ampoule 10 du feu de position 6 ou d'un effort en traction sur le support flexible, par l'intermédiaire de l'embout de préhension.

La figure 4 montre une vue arrière en coupe du porte lampe 7 selon l'invention. Cette figure 4 montre le support flexible 9 emboîté dans le manchon rigide 8. Dans cet exemple, le support flexible 9 est verrouillé dans le manchon rigide 8. Deux clips 39 et 41 du support flexible 9 sont respectivement encastrés dans des orifices 27 et 42 du manchon rigide 8.

Cette figure 4 montre également un des moyens formant le système de détrompage, à savoir la forme ovale du manchon rigide 8 adaptée pour recevoir la forme ovale de la queue 34 du support flexible 9.

## Revendications

1. Dispositif d'éclairage et/ou de signalisation (1) pour véhicule automobile comportant un boîtier (2) fermé par une glace (3) de protection, à l'intérieur duquel est montée un feu de signalisation, du type feu de position, (6) comprenant un porte lampe (7) sur lequel est fixée une ampoule (10),
ledit porte lampe (7) comportant :
- un manchon rigide (8) fixé sur le boîtier (3), et
- un support flexible (9), à une première extrémité (e1) duquel est fixée l'ampoule (10), apte à être introduit dans le manchon rigide (8),
**caractérisé en ce que** le manchon (8) , et le support flexible (9) une fois introduit dans le manchon (8) , se trouvent pour l'essentiel à l'intérieur du boîtier (2) dudit dispositif d'éclairage et/ou de signalisation (1).

2. Dispositif selon la revendication 1, **caractérisé en ce que** le manchon rigide (8) comporte :
- une sortie (S) apte à recevoir une tête (30) du support flexible (9), et
- une entrée (E) apte à recevoir une queue (34) du support flexible (9).

3. Dispositif selon la revendication 2, **caractérisé en ce que** la tête (30) et la queue (34) du support flexible (9) sont rigides et reliées par l'intermédiaire d'un corps flexible (40).

4. Dispositif selon l'une quelconque des revendications 2 à 3, **caractérisé en ce que** le manchon rigide (8) comporte des premiers contacts électriques (13, 14) placés sur la sortie (S) dudit manchon rigide (8) et reliés à une source d'alimentation électrique.

5. Dispositif selon la revendication 4, **caractérisé en ce que** la tête (30) du support flexible (9) comporte des seconds contacts électriques (32, 33) assurant une liaison électrique entre l'ampoule (10) et les premiers contacts électriques (13, 14) du manchon rigide (8).

6. Dispositif selon l'une quelconque des revendications 1 à 5, **caractérisé en ce que** le porte lampe (7) comporte un système de détrompage, permettant l'orientation du support flexible (9) par rapport au manchon rigide (8).

7. Dispositif selon la revendication 6, **caractérisé en ce que** le support flexible (9) et le manchon rigide (8) ont chacun une forme au moins partiellement ovale, formant système de détrompage.

8. Dispositif selon la revendication 6 ou 7, **caractérisé en ce que** le support flexible (9) comporte des nervures (36, 37, 38) et le manchon rigide (8) comporte des fentes (24, 25) aptes à recevoir les nervures du support flexible, ou réciproquement, les nervures et les fentes formant système de détrompage.

9. Dispositif selon l'une quelconque des revendications 1 à 8, **caractérisé en ce que** le porte lampe (7) comporte au moins un système de verrouillage, notamment par un système de clipsage comprenant un ergot (39) sur le support flexible (9) associé à une ouverture (27) dans le manchon rigide (8).

10. Dispositif selon l'une quelconque des revendications 2 à 9, **caractérisé en ce que** la queue (34) du support flexible (9) comporte un embout de préhension (11).

11. Dispositif selon l'une quelconque des revendications 1 à 10, **caractérisé en ce que** le manchon rigide (8) comporte un support (18) apte à supporter le manchon rigide (8).

12. Dispositif selon la revendication 11, **caractérisé en ce que** le support (18) comporte une tige rigide (19) munie d'un pied (20), ledit pied étant notamment de forme plate et/ou comportant un élément élastique de type lame ressort (21).

13. Dispositif selon l'une quelconque des revendications 2 à 12, **caractérisé en ce que** le manchon rigide (8) comporte, sur l'entrée (E), une languette de fixation (22).

14. Dispositif selon l'une quelconque des revendications 4 à 13, **caractérisé en ce que** les premiers contacts électriques (13, 14) du manchon rigide (8) sont reliés à la source d'alimentation électrique au moyen de fils électriques (15, 16).

15. Dispositif selon la revendication 14, **caractérisé en ce que** le manchon rigide (8) comporte au moins un moyen d'attache (17) des fils électriques (13, 14) sur ledit manchon rigide.

16. Véhicule automobile, **caractérisé en ce qu'**il est équipé d'au moins d'un dispositif selon l'une quelconque des revendications précédentes.

## Claims

1. Vehicle lighting and/or signalling device (1) comprising a case (2) closed by a protection glass (3), inside which a marker light is mounted, of the side-light type, (6) including a lamp holder (7) on which a lamp (10) is fixed, said lamp (7) comprising
- a rigid sleeve (8) fixed on the case (3), and
- a flexible support (9), at a first end (e1) of which is fixed the lamp (10), capable of being introduced into the rigid sleeve (8),
**characterized in that** the sleeve (8) and the flexible support (9), once introduced into the sleeve (8), are essentially located inside the case (2) of said lighting and/or signalling device (1).

2. Device according to claim 1, **characterized in that** the rigid sleeve (8) comprises
- an output (S) capable of receiving a head (30) of the flexible support (9), and
- an input (E) capable of receiving a tail (34) of the flexible support (9).

3. Device according to claim 2, **characterized in that** the head (30) and the tail (34) of the flexible support (9) are rigid and are connected by means of a flexible body (40).

4. Device according to either of claims 2 or 3, **characterized in that** the rigid sleeve (8) comprises first electrical contacts (13, 14) arranged on the output (S) of said rigid sleeve (8) and connected to a power source.

5. Device according to claim 4, **characterized in that** the head (30) of the flexible support (9) comprises second electrical contacts (32, 33) ensuring electric connection between the lamp (10) and the first electrical contacts (13, 14) of the rigid sleeve (8).

6. Device according to anyone of claims 1 to 5, **characterized in that** the lamp holder (7) comprises a biasing system to guarantee the orientation of the flexible support (9) relative to the rigid sleeve (8).

7. Device according to claim 6, **characterized in that** the flexible support (9) and the rigid sleeve (8) are each of a shape, which is at least partially oval, forming the biasing system.

8. Device according to claim 6 or 7, **characterized in that** the flexible support (9) comprises ribs (36, 37, 38) and the rigid sleeve (8) comprises slits (24, 25) capable of receiving the ribs of the flexible support, or reciprocally, the ribs and the slits forming the biasing system.

9. Device according to anyone of claims 1 to 8, **characterized in that** the lamp holder (7) comprises at least one interlocking system, in particular a clip system including a pin (39) on the flexible support (9) associated to an opening (27) in the rigid sleeve (8).

10. Device according to anyone of claims 2 to 9, **characterized in that** the tail (34) of the flexible support (9) comprises a gripping end (11).

11. Device according to anyone of claims 1 to 10, **characterized in that** the rigid sleeve (8) comprises a support (18) capable of supporting the rigid sleeve (8).

12. Device according to claim 11, **characterized in that** the support (18) comprises a rigid stem (19) provided with a foot (20), said foot in particular being of a flat shape and/or comprising an elastic element of the leaf spring type (21).

13. Device according to anyone of claims 2 to 12, **characterized in that** the rigid sleeve (8) comprises, on the input (E), a fixing strip (22).

14. Device according to anyone of claims 4 to 13, **characterized in that** the first electrical contacts (13, 14) of the rigid sleeve (8) are connected to the power source by means of electric wires (15, 16).

15. Device according to claim 14, **characterized in that** the rigid sleeve (8) comprises at least one means (17) for fixing the electric wire (13, 14) on said rigid sleeve.

16. Motor vehicle, **characterized in that** it is equipped with at least one device according to anyone of the preceding claims.

## Patentansprüche

1. Beleuchtungs- und/oder Signalvorrichtung (1) für Kraftfahrzeuge, die ein durch eine Schutzscheibe (3) verschlossenes Gehäuse (2) umfasst, in dem eine Signalleuchte vom Typ Begrenzungslicht (6) montiert ist, mit einem Lampenhalter (7), an dem eine Glühlampe (10) befestigt ist,
wobei der Lampenhalter (7) umfasst:
- eine am Gehäuse (3) befestigte starre Hülse (8), und
- einen flexiblen Träger (9), an dessen einem Ende (e1) die Glühlampe (10) befestigt ist und der in die starre Hülse (8) eingeführt zu werden vermag,
**dadurch gekennzeichnet, dass** sich die Hülse (8) und der flexible Träger (9) nach dessen Einführen in die Hülse (8) im Wesentlichen innerhalb des Gehäuses (2) der Beleuchtungs- und/oder Signalvorrichtung (1) befinden.

2. Vorrichtung nach Anspruch 1,
**dadurch gekennzeichnet, dass** die starre Hülse (8) umfasst:
- einen Ausgang (S), der einen Kopf (30) des flexiblen Trägers (9) aufzunehmen vermag, und
- einen Eingang (E), der ein Endstück (34) des flexiblen Trägers (9) aufzunehmen vermag.

3. Vorrichtung nach Anspruch 2,
**dadurch gekennzeichnet, dass** der Kopf (30) und das Endstück (34) des flexiblen Trägers (9) starr sind und durch einen flexiblen Körper (40) miteinander verbunden sind.

4. Vorrichtung nach einem der Ansprüche 2 bis 3,
**dadurch gekennzeichnet, dass** die starre Hülse (8) erste elektrische Kontakte (13, 14) aufweist, die am Ausgang (S) der starren Hülse (8) platziert und mit einer Stromquelle verbunden sind.

5. Vorrichtung nach Anspruch 4,
**dadurch gekennzeichnet, dass** der Kopf (30) des flexiblen Trägers (9) zweite elektrische Kontakte (32, 33) aufweist, die eine elektrische Verbindung zwischen der Glühlampe (10) und den ersten elektrischen Kontakten (13, 14) der starren Hülse (8) herstellen.

6. Vorrichtung nach einem der Ansprüche 1 bis 5,
**dadurch gekennzeichnet, dass** der Lampenhalter (7) ein Unverwechselbarkeitssystem umfasst, das die Ausrichtung des flexiblen Trägers (9) bezüglich der starren Hülse (8) erlaubt.

7. Vorrichtung nach Anspruch 6,
**dadurch gekennzeichnet, dass** der flexible Träger (9) und die starre Hülse (8) jeweils eine wenigstens zum Teil ovale Form haben, die ein Unverwechselbarkeitssystem bildet.

8. Vorrichtung nach Anspruch 6 oder 7,
**dadurch gekennzeichnet, dass** der flexible Träger (9) Rippen (36, 37, 38) und die starre Hülse (8) Schlitze (24, 25) aufweist, welche die Rippen des flexiblen Trägers aufzunehmen vermögen oder umgekehrt, wobei die Rippen und die Schlitze ein Unverwechselbarkeitssystem bilden.

9. Vorrichtung nach einem der Ansprüche 1 bis 8,
**dadurch gekennzeichnet, dass** der Lampenhalter (7) wenigstens ein Verriegelungssystem insbesondere durch ein Clipverbindungssystem aufweist, mit einem einer Öffnung (27) in der starren Hülse (8) zugeordneten Vorsprung (39) auf dem flexiblen Träger (9).

10. Vorrichtung nach einem der Ansprüche 2 bis 9,
**dadurch gekennzeichnet, dass** das Endstück (34) des flexiblen Trägers (9) ein Griffstück (11) aufweist.

11. Vorrichtung nach einem der Ansprüche 1 bis 10,
**dadurch gekennzeichnet, dass** die starre Hülse (8) einen Halter (18) aufweist, der die starre Hülse (8) zu stützen vermag.

12. Vorrichtung nach Anspruch 11,
**dadurch gekennzeichnet, dass** der Halter (18) eine starre Stange (19) aufweist, die mit einem Fuß (20) versehen ist, wobei der Fuß insbesondere eine ebene Form hat und/oder ein elastisches Element vom Typ Blattfeder (21) aufweist.

13. Vorrichtung nach einem der Ansprüche 2 bis 12,
**dadurch gekennzeichnet, dass** die starre Hülse (8) am Eingang (E) eine Befestigungszunge (22) aufweist.

14. Vorrichtung nach einem der Ansprüche 4 bis 13,
**dadurch gekennzeichnet, dass** die ersten elektrischen Kontakte (13, 14) der starren Hülse (8) durch Leitungsdrähte (15, 16) mit der Stromquelle verbunden sind.

15. Vorrichtung nach Anspruch 14,
**dadurch gekennzeichnet, dass** die starre Hülse (8) wenigstens ein Mittel (17) zum Befestigen der Leitungsdrähte (15, 16) an der starren Hülse umfasst.

16. Kraftfahrzeug,
**dadurch gekennzeichnet, dass** es mit wenigstens einer Vorrichtung nach einem der vorhergehenden Ansprüche ausgestattet ist.
